# EUROPEAN PATENT SPECIFICATION

(11) **EP 3 759 281 B1**
(45) Date of publication and mention of the grant of the patent: **10.07.2024**
(21) Application number: 18907880.1
(22) Date of filing: 01.03.2018
(51) Int. Cl.: E01C 23/20

(54) **A METHOD AND APPARATUS FOR LAYING PAINT INDICIA ON A ROAD SURFACE**
VERFAHREN UND VORRICHTUNG ZUM VERLEGEN VON FARBMARKIERUNGEN AUF EINER STRASSENOBERFLÄCHE
PROCÉDÉ ET APPAREIL DE POSE D'INDICES PEINTS SUR UNE SURFACE DE ROUTE

(43) Date of publication of application: 06.01.2021
(73) Proprietor: Autonotech Pte Ltd, Singapore 068602 (SG)
(72) Inventor: BELL, Ian William, Singapore 068602 (SG)
(74) Representative: Lavoix
(86) International application number: PCT/SG2018/050095
(87) International publication number: WO 2019/168463

(56) References cited:
- EP-A2- 2 416 303
- WO-A1-97/14850
- CN-A- 107 090 766
- JP-A- 2005 092 404
- JP-A- H09 269 821
- KR-A- 20170 018 199
- US-A1- 2016 132 705
- BANA S. V. ET AL.: "Real-time vehicle location with desired accuracy", 2001 IEEE INTELLIGENT TRANSPORTATION SYSTEMS CONFERENCE PROCEEDINGS, 25 August 2001 (2001-08-25), pages 160 - 165, XP010555763, [retrieved on 20180507]

## Description

### FIELD OF INVENTION

The present invention relates to the field of autonomous vehicles. In particular, the present invention relates to a method for laying paint indicia on a road surface, and an apparatus for laying paint indicia on a road surface.

### BACKGROUND

Improvements in automotive technology have led to motor vehicles which are increasingly intelligent. For instance, there are already motor vehicles which are fully autonomous, and used on existing road infrastructure. However, accidents involving such fully autonomous vehicles occur regularly, and as such, the receptiveness to such fully autonomous vehicles by the general public is still lukewarm.

A key impediment for traditional autonomous vehicles is how the vehicle processes unusual circumstances. An example of this is when the autonomous vehicle traverses along a new stretch of road, or a road that is undergoing changes. In traditional autonomous vehicle theory, the vehicle is expected to process this new development through the use of GPS, and other 'visual' systems, before processing the newly acquired data, and making decisions based on that. This process is flawed, as depicted in several accidents involving autonomous vehicles. Furthermore, it is noted that some of the shortcomings may be resultant from the GPS infrastructure not being able to cope with large scale use beyond the military applications that it was intended for from its initial conception.

Magnetism has been used in the field of autonomous vehicles for many years, and substantial research has been carried out in this regard. Magnets are either embedded in a road surface, or placed on the road surface itself, both on the edge of the road, and in the middle of the road, from whence they emit a magnetic field which, in turn, is detected by magnetic sensors installed on the underside of vehicles. These sensor modules typically convey over 500 readings per second. This results in the vehicle understanding which lane it must stay in by determining which set of road magnets it must travel between, while similarly understanding the limits and boundaries of the road itself. Magnets on other vehicles also interact with one another to create a 'safe' zone of travel.

The types of magnets used are, for instance, ceramic magnetic markers, neodymium magnets, ferrite magnets and so forth. Neodymium magnets are substantially more expensive than the ceramic markers, but are far more powerful. Ferrite magnets are currently perceived as being the most cost-efficient and advantageous.

Magnetization is accepted as a reliable and largely failsafe way to keep an autonomous vehicle both in its lane, and on the road, while additionally being beneficial to traffic patterns by offering the potential of creating far narrower lanes on which vehicles can travel in so-called 'platoons'.

The art generally uses magnetism to overcome problems associated with conditions of low or no visibility of road markings, where vision-based systems would fail. EP 2 416 303 discloses such a system, and is concerned with road marks that contain magnetic particles to address problems associated with determining the existence of stop lines that can be difficult to identify due to weather conditions or other obstructions. EP 2 416 303, however, simply identifies the existence of the road marks by way of magnetism, and therefore cannot use the road marks for any purpose other than to bound movement of the vehicle. WO 97/14850 is similarly concerned with visibility of road markings during inclement weather and the like.

There are, however, challenges to magnetization, particularly the cost associated with infrastructure implementation. WO 97/14850 discloses the placement of magnetic articles beneath a traffic bearing surface, that are permanently magnetisable to convey their position to a vehicle passing over the surface. US 2016/132705 discloses pavement marking material with rare earth magnetic components and RFID tags, the RFID tags and magnetic components conveying position information. JP H09 269821 A discloses the use of a magnetisable powder in marking road surface, and JP 2005 092404 A discloses magnetisable nails positioned at predetermined intervals that encode information in an M-sequence pattern which is a kind of pseudo noise code (a similar pseudo-noise code system, using a on-vehicle database, is disclosed in S. V. Bana and P. Varaiya, "Real-time vehicle location with desired accuracy," ITSC 2001. 2001 IEEE Intelligent Transportation Systems.), but both have the inherent limitation that the information encoded into the magnetisable components is fixed or not selectable. KR 2017 0018199 A discloses a magnetic field based unmanned driving vehicle traveling guide system which requires drilling of roads and insertion of information generating apparatus into perforations in roads, which is costly and damaging to the road surface particularly if inserted components expand or contract at a different rate to the road, wear at a different rate to the road and so on. Currently, it would be challenging to retro-fit magnetic features into existing road infrastructure without substantial downtime of the affected portion of the road network.

If magnetic elements are not incorporated into the existing road infrastructure, it is highly likely that the feasibility of autonomous vehicles will be compromised and correspondingly, the adoption of autonomous vehicles will be adversely affected.

### SUMMARY

In a first aspect, there is provided method for laying paint indicia on a road surface according to claim 1.

In a second aspect, there is provided an apparatus for laying paint indicia on a road surface according to claim 6.

### DESCRIPTION OF FIGURES

Some embodiments of the present invention are hereinafter described, by way of example only, with reference to the accompanying drawings, wherein:
FIG 1 shows an embodiment of the present invention during deployment;
FIG 2 shows a close up of a sensor depicted in FIG 1;
FIG 3 shows a process flow of an embodiment of a method for laying paint indicia on a road surface;
FIG 4 shows a perspective view of an embodiment of an apparatus used in the method of FIG 3; and
FIG 5 shows a process flow of an embodiment of a method for transmitting information to vehicles not in accordance with the appended claims.

### DETAILED DESCRIPTION

The present invention provides a method and apparatus for laying paint indicia on a road surface, whereby the paint indicia includes magnetic elements that can be detected by at least one sensor to provide binary signals for transmission of information to a vehicle communicatively coupled to the at least one sensor. The transmission of information can be carried out regardless of a speed of the vehicle. Furthermore, the transmission of information can be carried out under all weather/visibility/road conditions.

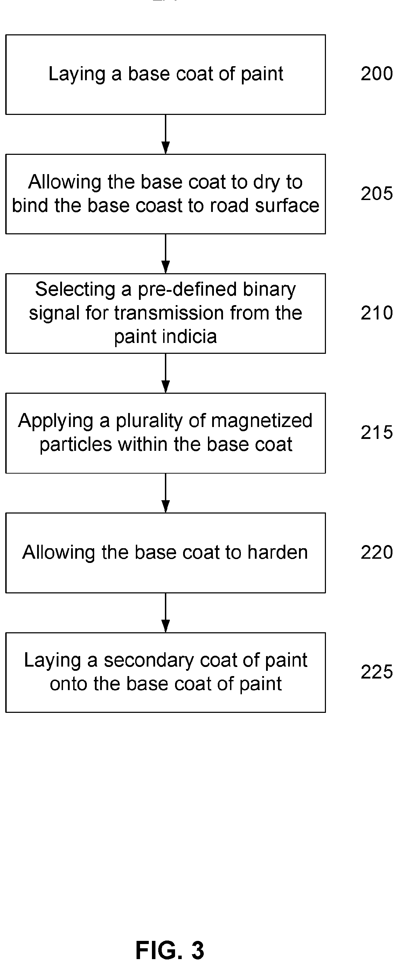

An example of a method for laying paint indicia on a road surface will now be described with reference to FIG 3. It is noted that information can only be transmitted to a vehicle when appropriate paint indicia is laid on a road surface. An apparatus to carry out the method will be described in greater detail in a later portion, but it should be appreciated that the method can be carried out using other apparatus or even multiple apparatus.

At step 200, a base coat of paint is laid on a road surface. The paint used for the base coat can be doped with magnetic particles, whereby the paint is suitable for use on the road surface. At step 205, the base coat of paint is allowed to dry so as to allow the base coat of paint to bind to the road surface, such that the paint indicia is able to remain in a desired position during high traffic usage of the road surface and even if cracks develop along the road surface. However, the base coat of paint could be semi-hardened by the end of the first pre-determined period.

Subsequently, at step 210, a pre-defined binary signal for desired transmission from the paint indicia is selected. For example:
- binary signal 1 is selected when information to travel straight is desired to be provided to the vehicle;
- binary signal 2 is selected when information to slow down is desired to be provided to the vehicle; and
- binary signal 3 is selected when information to stop is desired to be provided to the vehicle, and so forth.

It should be noted that each binary signal can be any combination of "1" and "0". For example, a "1" reading can occur when a north polarity is detected, while a "0" reading can occur when a south polarity is detected. Of course, the converse can also be a possible embodiment.

In one embodiment, a series of lines/strips on the road can be used to transmit each binary signal. For example, if a series of eight lines/strips is used, it then becomes possible to transmit 256 different types of binary signals. This is so because each line/strip can provide either a "1" or a "0" reading. In order to cater for different vehicular speeds, the width of the lines/strips can be varied. For example, thicker lines/strips can be used for roads with higher speed limits, while thinner lines/strips can be used for roads with lower speed limits. It is also possible that more lines/strips are used for roads with higher speed limits. In some embodiments, the lines/strips can be located within markers, whereby the markers can be lines/strips which do not have a polarity. Thus, when the markers are detected by a vehicle, the vehicle then starts to read the binary signal conveyed by the series of lines/strips.

In some embodiments where the vehicle travels at high speeds like on highways and autobahns, simplified signals (for example, just a single magnetic polarity) demarcated with the markers are used such that the magnetic flux detector on the vehicle is able to determine a start and an end of each binary signal at speed. It is possible to use simplified signals on highways and autobahns as there are less available options (typically only go straight or filter left/right) compared to city driving.

It should also be noted that each binary signal can be associated with particular information, and the user can select the particular information rather than a type of binary signal during the selection process. These binary signals can define road boundaries and lane limits on the road. Furthermore, they transmit crucial information to the vehicle, enabling defined and determinative action on the part of the vehicle.

At step 215, a plurality of magnetic particles are applied within the semi-hardened base coat of paint, the magnetic particles being applied in accordance with the selected binary signal. Specifically, the placement of the plurality of magnetic particles is in a configuration which provides the pre-defined binary signal for a vehicle with a magnetic reader traversing over the paint indicia. The plurality of magnetic particles are placed within the base coat of paint in a fixed configuration so that the selected binary signal being transmitted is permanent. Once the plurality of magnetic particles are placed within the base coat of paint, the base coat is then allowed to harden at step 220.

The placement of the plurality of magnetic particles can be carried out using an apparatus with a paint outlet and an electromagnet, whereby the electromagnet is activated to align the magnetic particles in a manner where the desired binary signal is transmittable to the vehicle with a magnetic reader traversing over the paint indicia on the road surface. Further details of an embodiment of the apparatus will be provided in a later portion.

Finally, at step 225, a secondary coat of paint is laid onto the base coat of paint. The secondary coat of paint can be different from the base coat of paint. For example, the secondary coat of paint can have light reflective properties or can be hard-wearing such that heavy traffic would not degrade the secondary coat of paint.

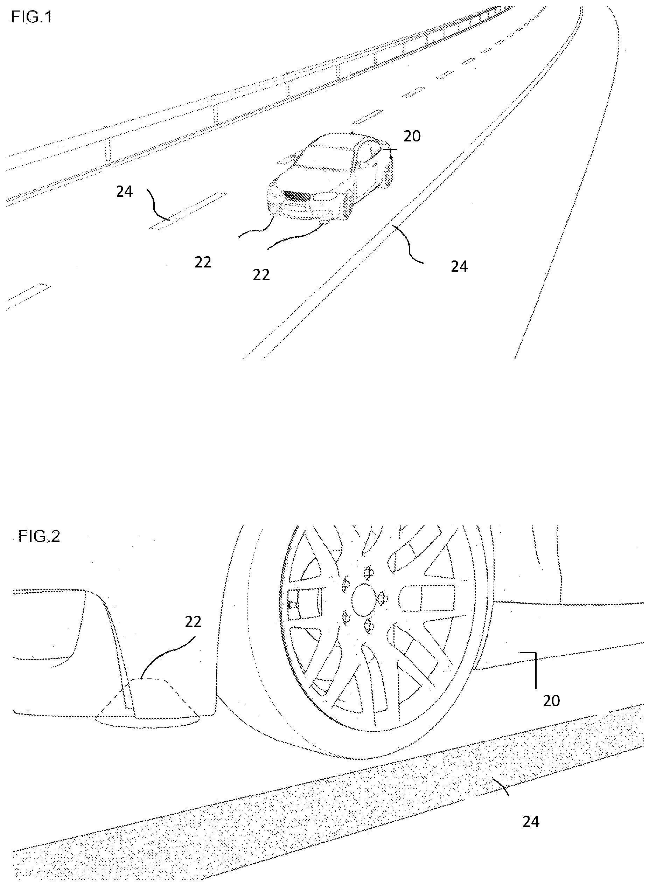

The method that has been described lays paint indicia on road surfaces. The paint indicia is configured to function in a manner as shown in FIGs 1 and 2. Vehicle 20 is equipped with magnetic sensors which will be given information (binary signals) by detecting the flux density of the magnetic particles in the paint indicia 24. This results in, for example,
1. A vehicle that remains within its lane; and
2. A vehicle that is immediately instructed of what it is expected to do in any given situation (such as stopping at a stop street, slowing for pedestrian crossing, maintaining a newly determined speed through a work zone, etc.).

It should also be noted that determining each binary signal is dependent on accurate detection of flux density and the binary signal can be determined by a processor on the vehicle. For example, the binary signal can be determined from a look-up table. In this regard, the flux density can be made more pronounced by using more magnetic particles. Furthermore, a magnetic flux detector on the vehicle should be configured to be sufficient sensitive to accurately detect flux density variations.

With use of the method, the vehicle 20 is no longer expected to acquire data through visual means before processing and making key decisions. Instead, the magnetic particles in the paint indicia will provide information to the vehicle 20 on precisely how it must react with appropriate instructions by the processor, and will ensure adherence to pre-defined road conditions.

In this regard, the roads, are no longer passive, but become active providers of critical information to vehicles. The vehicles are provided information, regardless of weather/road conditions, which lane they should travel on, what the boundary of the road is, what is expected of the vehicle on the road and so forth.

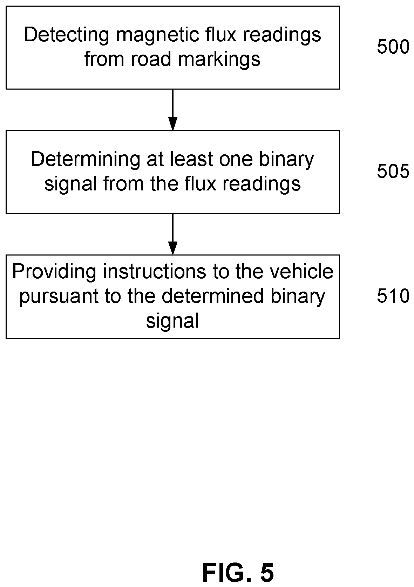

An example of a method for transmitting information to vehicles, not in accordance with the appended claims, will now be described with reference to FIG 5. It is noted that information can only be transmitted to a vehicle when appropriate paint indicia is laid on a road surface. Typically, the vehicle should include a magnetic flux detector and a processor. In some instances, the vehicle can include vehicle accessories of a magnetic flux detector and a processor, whereby the accessories are communicatively coupled to a processor of the vehicle.

At step 500, magnetic flux readings from road markings are detected with the magnetic flux detector. The road markings can be formed by magnetized paint indicia, provided in a similar manner as described in preceding paragraphs. The magnetized paint indicia can be in a form of a series of lines/strips.

At step 505, at least one binary signal from the magnetic flux readings is determined by the processor. It should be noted that each binary signal can be any combination of "1" and "0". For example, a "1" reading can occur when a north polarity is detected, while a "0" reading can occur when a south polarity is detected. Of course, the converse can also be a possible embodiment.

In one embodiment, a series of lines/strips on the road can be used to transmit each binary signal. For example, if a series of eight lines/strips is used, it then becomes possible to transmit 256 different types of binary signals. This is so because each line/strip can provide either a "1" or a "0" reading. In order to cater for different vehicular speeds, the width of the lines/strips can be varied. For example, thicker lines/strips can be used for roads with higher speed limits, while thinner lines/strips can be used for roads with lower speed limits. It is also possible that more lines/strips are used for roads with higher speed limits. In some embodiments, the lines/strips can be located within markers, whereby the markers can be lines/strips which do not have a polarity. Thus, when the markers are detected by a vehicle, the vehicle then starts to read the binary signal conveyed by the series of lines/strips.

In some embodiments where the vehicle travels at high speeds like on highways and autobahns, simplified signals (for example, just a single magnetic polarity) demarcated with the markers are used such that the magnetic flux detector on the vehicle is able to determine a start and an end of each binary signal at speed. It is possible to use simplified signals on highways and autobahns as there are less available options (typically only go straight or filter left/right) compared to city driving.

It should also be noted that each binary signal can be associated with particular information, and the user can select the particular information rather than a type of binary signal during the selection process. These binary signals can define road boundaries and lane limits on the road. Furthermore, they transmit crucial information to the vehicle, enabling defined and determinative action on the part of the vehicle.

Finally, at step 510, instructions pursuant to the determined binary signal are provided to the vehicle by the processor. The at least one binary signal can be determined from a look-up table. The instructions can result in, for example,
1. A vehicle that remains within its lane; and
2. A vehicle that is immediately instructed of what it is expected to do in any given situation (such as stopping at a stop street, slowing for pedestrian crossing, maintaining a newly determined speed through a work zone, etc.).

The present invention provides a solution to magnetization of both existing and new roads, whereby the downtime of existing roads when introducing the magnetization is not substantial, as it can be merely the painting over of existing road markings. Subsequently, the magnetized paint indicia are not susceptible to poor lighting conditions, bad weather, obstructions, and so forth. The present invention provides a reliable road system that, for instance, allows speed limits to be adhered to by reading 'slow down'-specific magnetized markings, or pedestrian zones to be identified from 'pedestrian-only'-specific markings.

In some embodiments, the method for laying paint indicia can be simplified. Only a single pass is carried out. A plurality of receptacles each containing both paint and magnetic particles is used, and the laying of the contents of each receptacle represents either "1" or "0" when the magnetized particles in each receptacle are aligned using an electromagnet. Thus the single pass method can generally be viewed as laying a binary signal with a single pass by emptying appropriate receptacles at appropriate positions on a road.

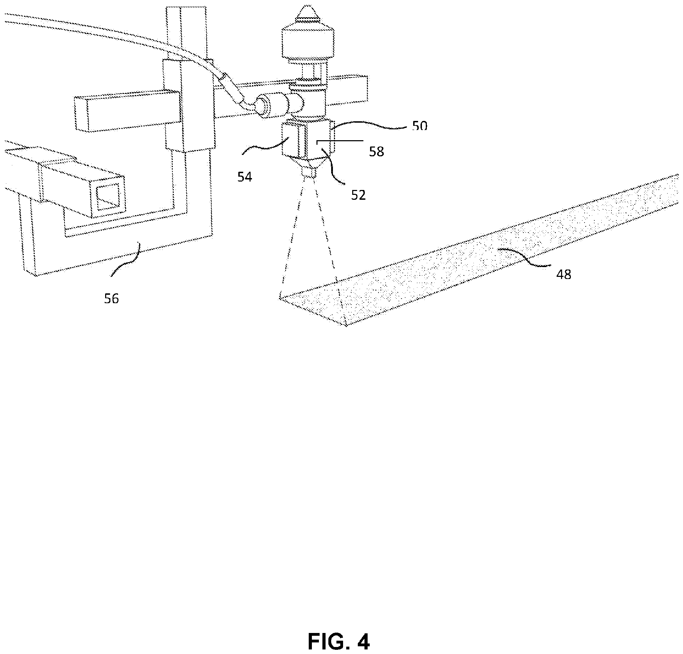

In another aspect, with reference to FIG 4, there is shown an apparatus 50 for laying paint indicia 48 on a road surface. The apparatus 50 can be used for the method as described earlier.

The apparatus 50 comprises a paint outlet 52 for egress of paint, the paint including a plurality of magnetic particles. The apparatus includes a magnetic force generator 54, typically an electromagnet, for aligning the magnetic particles at the paint outlet 52 in a manner where a desired binary signal is transmittable. There is also a controller 58 for activating the magnetic force generator 54, and for operating the paint outlet 52. By activating the magnetic force generator 54 and operating the paint outlet 52, the controller 58 is able to control how the magnetic particles in the paint are laid in the paint indicia 48, specifically in a manner where the desired binary signal is transmittable from the paint indicia 48.

The apparatus can also include a mount 56 for securing the apparatus 50 to a vehicle that lays the paint indicia on roads. As mentioned earlier, the apparatus 50 enables the earlier mentioned method to be carried out, and as it will be appreciated, retrofitting vehicles to mount the apparatus 50 will not be difficult.

Throughout this specification and claims which follow, unless the context requires otherwise, the word "comprise", and variations such as "comprises" or "comprising", will be understood to imply the inclusion of a stated integer or group of integers or steps but not the exclusion of any other integer or group of integers.

## Claims

1. A method for laying paint indicia on a road surface, the method including:
(200) laying a base coat of paint;
(205) allowing the base coat of paint to dry to bind the base coat to the road surface;
(210) selecting a pre-defined binary signal for transmission from the paint indicia (48); and
(215) applying a plurality of magnetic particles within the base coat of paint using a paint outlet (52), by using a controller to activate a magnetic force generator (54), that aligns the particles at the paint outlet (52), and operate the paint outlet (52), the controller (58) controlling how the magnetic particles are laid in the paint indicia (48), the magnetic particles being applied in accordance with the pre-defined binary signal for providing to a vehicle (20) by way of flux density variations of the binary signal being detected by a magnet flux detector of the vehicle and from which a processor of the vehicle determines the binary signal, to enable determinative action on the part of the vehicle, including at least one of stop, slow down, lane limit, remain within lane and which lane to travel on.

2. The method of claim 1, further including (225) laying a secondary coat of paint onto the base coat.

3. The method of either claim 1 or 2, wherein the plurality of magnetic particles are placed within the base coat of paint to transmit the pre-defined binary signal.

4. The method of any of claims 1 to 3, wherein the placement of the plurality of magnetic particles is carried out using an apparatus with a paint outlet and an electromagnet, the electromagnet being activated to align the magnetic particles in a manner where desired binary signal is transmittable.

5. The method of claim 1 wherein the plurality of magnetic particles are applied using a plurality of receptacles each containing both paint and magnetic particles, the method further comprising:
emptying each receptacle in a pre-determined sequence,
wherein the magnetic particles in each receptacle are aligned using an electromagnet after each receptacle is emptied.

6. An apparatus (50) for laying paint indicia (48) on a road surface, the apparatus comprising:
a paint outlet (52) for egress of paint, the paint including a plurality of magnetic particles; and
a magnetic force generator (54) for aligning the magnetic particles at the paint outlet in a manner where a desired binary signal is transmittable for providing to a vehicle (20) by way of flux density variations of the binary signal being detected by a magnet flux detector of the vehicle and from which a processor of the vehicle determines the binary signal, to enable determinative action on the part of the vehicle, including at least one of stop, slow down, lane limit, remain within lane and which lane to travel on; and
a controller (58) for activating the magnetic force generator (54) and operating the paint outlet (52), to control how the magnetic particles are laid in the paint indicia..

7. The apparatus of claim 6, wherein the magnetic force generator (54) is an electromagnet.

8. The apparatus of either claim 6 or 7, further comprising a controller (58) for activating the magnetic force generator (54), and for operating the paint outlet (52).

9. The method of claim 1, wherein applying the plurality of magnetic particles comprises applying the magnetic particles within markers.

10. The method of claim 9, wherein the markers comprise lines or strips without a polarity.

11. The method of claim 9 or 10, wherein the markers demarcate a start of the pre-defined binary signal.

12. The method of any one of claims 9 to 11, wherein the markers demarcate an end of the pre-defined binary signal.

## Patentansprüche

1. Verfahren zum Aufbringen von Farbmarkierungen auf eine Straßenoberfläche, wobei das Verfahren Folgendes umfasst:
(200) Auftragen eines Grundanstrichs;
(205) Trocknen lassen des Grundanstrichs, damit sich der Grundanstrich mit der Straßenoberfläche verbindet;
(210) Auswählen eines vordefinierten binären Signals für die Übertragung von den Farbmarkierungen (48); und
(215) Aufbringen einer Vielzahl von magnetischen Partikeln innerhalb des Grundanstrichs über einen Farbauslass (52), indem ein Steuergerät verwendet wird, um einen Magnetkraftgenerator (54) zu aktivieren, der die Partikel am Farbauslass (52) ausrichtet, und den Farbauslass (52) zu bedienen, wobei das Steuergerät (58) steuert, wie die magnetischen Partikel in die Farbmarkierung (48) eingebracht werden, wobei die magnetischen Partikel in Übereinstimmung mit dem vordefinierten binären Signal aufgetragen werden, das einem Fahrzeug (20) bereitgestellt wird, indem Flussdichteänderungen des binären Signals von einem Magnetflussdetektor des Fahrzeugs erfasst werden, anhand denen ein Prozessor des Fahrzeugs das binäre Signal bestimmt, um eine bestimmende Aktion seitens des Fahrzeugs zu ermöglichen, einschließlich mindestens einer der folgenden Aktionen: Anhalten, Verlangsamen, Begrenzen der Fahrspur, Verbleiben auf der Fahrspur und Festlegen, auf welcher Fahrspur zu fahren ist.

2. Verfahren nach Anspruch 1, bei dem ferner (225) ein zweite Farbanstrich auf den Grundanstrich aufgetragen wird.

3. Verfahren nach Anspruch 1 oder 2, wobei die mehreren magnetischen Partikel im Grundanstrich angeordnet sind, um das vordefinierte binäre Signal zu übertragen.

4. Verfahren nach einem der Ansprüche 1 bis 3, wobei die Platzierung der Vielzahl von magnetischen Partikeln unter Verwendung einer Vorrichtung mit einem Farbauslass und einem Elektromagneten durchgeführt wird, wobei der Elektromagnet aktiviert wird, um die magnetischen Partikel in einer Weise auszurichten, bei der das gewünschte binäre Signal übertragbar ist.

5. Verfahren nach Anspruch 1, bei dem die mehreren magnetischen Partikel unter Verwendung mehrerer Behälter aufgebracht werden, die jeweils sowohl Farbe als auch magnetische Partikel enthalten, wobei das Verfahren ferner Folgendes umfasst:
Entleeren jedes Behälters in einer bestimmten Reihenfolge,
wobei die magnetischen Partikel in jedem Behälter mithilfe eines Elektromagneten nach dem Entleeren jedes Behälters ausgerichtet werden.

6. Vorrichtung (50) zum Aufbringen von Farbmarkierungen (48) auf eine Straßenoberfläche, wobei die Vorrichtung Folgendes umfasst:
einen Farbauslass (52) für den Austritt von Farbe, wobei die Farbe eine Vielzahl von magnetischen Partikeln enthält; und
einen Magnetkraftgenerator (54) zum Ausrichten der magnetischen Partikel am Farbauslass in einer Weise, bei der ein gewünschtes binäres Signal übertragbar ist, um es einem Fahrzeug (20) bereitzustellen, indem Flussdichteänderungen des binären Signals von einem Magnetflussdetektor des Fahrzeugs erfasst werden, anhand denen ein Prozessor des Fahrzeugs das binäre Signal bestimmt, um eine bestimmende Aktion seitens des Fahrzeugs zu ermöglichen, einschließlich mindestens einer der folgenden Aktionen: Anhalten, Verlangsamen, Begrenzen der Fahrspur, Verbleiben auf der Fahrspur und Festlegen, auf welcher Fahrspur zu fahren ist; und
ein Steuergerät (58) zum Aktivieren des Magnetkraftgenerators (54) und zum Bedienen des Farbauslasses (52), um zu steuern, wie die magnetischen Partikel in die Farbmarkierung eingebracht werden.

7. Vorrichtung nach Anspruch 6, wobei der Magnetkraftgenerator (54) ein Elektromagnet ist.

8. Vorrichtung nach Anspruch 6 oder 7, ferner umfassend ein Steuergerät (58) zum Aktivieren des Magnetkraftgenerators (54) und zum Bedienen des Farbauslasses (52).

9. Verfahren nach Anspruch 1, wobei das Aufbringen der Vielzahl von magnetischen Partikeln das Aufbringen der magnetischen Partikel innerhalb von Markierungen umfasst.

10. Verfahren nach Anspruch 9, wobei die Markierungen aus Linien oder Streifen ohne Polarität bestehen.

11. Verfahren nach Anspruch 9 oder 10, wobei die Markierungen einen Beginn des vordefinierten binären Signals abgrenzen.

12. Verfahren nach einem der Ansprüche 9 bis 11, wobei die Markierungen ein Ende des vordefinierten binären Signals markieren.

## Revendications

1. Procédé de pose d'un marquage de peinture sur une surface routière, le procédé comportant :
(200) la pose d'une couche de base de peinture ;
(205) le fait de laisser sécher la couche de base de peinture pour lier la couche de base à la surface de la route ;
(210) la sélection d'un signal binaire prédéfini pour transmission à partir du marquage de peinture (48) ; et
(215) l'application d'une pluralité de particules magnétiques dans la couche de base de peinture à l'aide d'une sortie de peinture (52), en utilisant un contrôleur pour activer un générateur de force magnétique (54), qui aligne les particules à la sortie de peinture (52), et faire fonctionner la sortie de peinture (52), le contrôleur (58) contrôlant la manière dont les particules magnétiques sont posées dans le marquage de peinture (48), les particules magnétiques étant appliquées conformément au signal binaire prédéfini à fournir à un véhicule (20) par le biais de variations de densité de flux du signal binaire détectées par un détecteur de flux magnétique du véhicule et à partir duquel un processeur du véhicule détermine le signal binaire, pour permettre une action déterminante de la part du véhicule, y compris au moins l'une d'un arrêt, d'un ralentissement, d'une limitation de la voie, d'un fait de rester dans la voie et quelle voie emprunter.

2. Procédé de la revendication 1, comportant en outre (225) la pose d'une deuxième couche de peinture sur la couche de base.

3. Procédé de la revendication 1 ou 2, dans lequel la pluralité de particules magnétiques sont placées dans la couche de base de peinture pour transmettre le signal binaire prédéfini.

4. Procédé selon l'une quelconque des revendications 1 à 3, dans lequel le placement de la pluralité de particules magnétiques est effectué à l'aide d'un appareil avec une sortie de peinture et un électro-aimant, l'électro-aimant étant activé pour aligner les particules magnétiques de manière à ce que le signal binaire souhaité puisse être transmis.

5. Procédé de la revendication 1, dans lequel la pluralité de particules magnétiques sont appliquées à l'aide d'une pluralité de récipients contenant chacun à la fois de la peinture et des particules magnétiques, le procédé comprenant en outre :
le vidage de chaque récipient dans un ordre prédéterminé,
dans lequel les particules magnétiques de chaque récipient sont alignées à l'aide d'un électro-aimant après que chaque récipient est vidé.

6. Appareil (50) pour poser des marquages de peinture (48) sur une surface routière, l'appareil comprenant :
une sortie de peinture (52) pour l'évacuation de la peinture, la peinture comportant une pluralité de particules magnétiques ; et
un générateur de force magnétique (54) pour aligner les particules magnétiques à la sortie de peinture de manière à ce qu'un signal binaire souhaité puisse être transmis pour fourniture à un véhicule (20) par le biais de variations de densité de flux du signal binaire détectées par un détecteur de flux magnétique du véhicule et à partir duquel un processeur du véhicule détermine le signal binaire, pour permettre une action déterminante de la part du véhicule, y compris au moins l'une d'un arrêt, d'un ralentissement, d'une limitation de la voie, d'un fait de rester dans la voie et quelle voie emprunter ; et
un contrôleur (58) pour activer le générateur de force magnétique (54) et faire fonctionner la sortie de peinture (52), afin de contrôler la façon dont les particules magnétiques sont posées dans le marquage de peinture.

7. Appareil selon la revendication 6, dans lequel le générateur de force magnétique (54) est un électro-aimant.

8. Appareil selon la revendication 6 ou 7, comprenant en outre un contrôleur (58) pour activer le générateur de force magnétique (54) et pour faire fonctionner la sortie de peinture (52).

9. Procédé selon la revendication 1, dans lequel l'application de la pluralité de particules magnétiques comprend l'application des particules magnétiques à l'intérieur de marqueurs.

10. Procédé selon la revendication 9, dans lequel les marqueurs comprennent des lignes ou des bandes sans polarité.

11. Procédé selon la revendication 9 ou 10, dans lequel les marqueurs délimitent un début du signal binaire prédéfini.

12. Procédé selon l'une quelconque des revendications 9 à 11, dans lequel les marqueurs délimitent une fin du signal binaire prédéfini.
